# EUROPÄISCHE PATENTANMELDUNG

(11) **EP 4 096 002 A2**
(43) Veröffentlichungstag der Anmeldung: **30.11.2022**
(21) Anmeldenummer: 22174815.5
(22) Anmeldetag: 23.05.2022
(51) Int. Cl.: H01M 50/242, H01M 50/249

(54) **BATTERIEMODUL FÜR EINE TRAKTIONSBATTERIE EINES ELEKTROFAHRZEUGS**

(30) Priorität: 25.05.2021 DE 102021113419
(71) Anmelder: Lisa Dräxlmaier GmbH, 84137 Vilsbiburg (DE)
(72) Erfinder: Bardosch, Benjamin, 84028 Landshut (DE); Wagner, Peter, 85757 Karlsfeld (DE); Flieser, Michael, 84144 Geisenhausen (DE); Hahn, Alexander, 91341 Röttenbach (DE); Magunia, Robert, 84144 Geisenhausen (DE); Sperl, Thomas, 94405 Landau a. d. Isar (DE)

(57) **Zusammenfassung**

Die vorliegende Erfindung bezieht sich auf ein Batteriemodul (100) für eine Traktionsbatterie eines Elektrofahrzeugs, wobei das Batteriemodul (100) zwei auf entgegengesetzten Seiten des Batteriemoduls (100) angeordnete, im Wesentlichen parallel zu einer Elektrodenfläche von Zellen (200) des Batteriemoduls (100) ausgerichtete Seitenteile (104) aufweist, wobei zumindest eines der Seitenteile (104) einen versetzt zu einer Haupterstreckungsebene (108) des Seitenteils (104) angeordneten, elastischen Bereich (106) aufweist, der dazu ausgebildet ist, eine Presskraft (110) senkrecht zu der Elektrodenfläche auf die Zellen (200) auszuüben.

## Beschreibung

### Technisches Gebiet

Die vorliegende Erfindung betrifft ein Batteriemodul für eine Traktionsbatterie eines Elektrofahrzeugs.

### Stand der Technik

Die vorliegende Erfindung wird im Folgenden hauptsächlich in Verbindung mit Traktionsbatterien für Elektrofahrzeuge beschrieben. Die Erfindung kann aber in jedem Akkumulator genutzt werden, in welchem große Energiemengen zu- oder abgeführt werden sollen.

Eine Traktionsbatterie eines Elektrofahrzeugs ist dazu konfiguriert, elektrische Energie zum Antreiben des Elektrofahrzeugs mit KFZ-Hochvoltspannung zu bevorraten, während des Betriebs für Beschleunigungsvorgänge mit hohen Stromstärken entladen zu werden und für elektrische Bremsvorgänge mit hohen Stromstärken geladen zu werden.

Zellen der Traktionsbatterie können in Batteriemodulen zusammengefasst sein. Die Traktionsbatterie kann mehrere Batteriemodule aufweisen. Die Batteriemodule können jeweils ein Gehäuse aufweisen.

Beim Laden und Entladen können die Zellen ihr Volumen beziehungsweise ihre Dicke ändern. Da die Traktionsbatterie beziehungsweise auch die Batteriemodule festgelegte Außenmaße aufweist, können zwischen den Gehäusen der Batteriemodulen und den Zellen kompressible Platten angeordnet werden, die bei einer Ausdehnung der Zellen komprimiert werden können.

### Beschreibung der Erfindung

Eine Aufgabe der Erfindung ist es daher, unter Einsatz konstruktiv möglichst einfacher Mittel ein verbessertes Batteriemodul für eine Traktionsbatterie eines Elektrofahrzeugs bereitzustellen. Eine Verbesserung kann hierbei beispielsweise einen verbesserten Dehnungsausgleich, insbesondere eine gleichmäßige Druckverteilung betreffen.

Die Aufgabe wird durch den Gegenstand des unabhängigen Anspruchs gelöst. Vorteilhafte Weiterbildungen der Erfindung sind in den abhängigen Ansprüchen, der Beschreibung und den begleitenden Figuren angegeben.

Bei Batteriezellen kann es durch Ladevorgänge und Entladevorgänge zu einer Volumenänderung kommen. Bei prismatischen Zellen oder Pouchzellen bewirkt die Volumenänderung eine Dickenänderung senkrecht zu einer Elektrodenfläche der Zellen. Da in einem Batteriemodul mehrere Batteriezellen senkrecht zu der Elektrodenfläche beziehungsweise ihren Flachseiten nebeneinander oder übereinander angeordnet sind, summieren sich diese Dickenänderungen. Außenmaße des Batteriemoduls sind jedoch konstruktiv vorgegeben und sollen nicht überschritten werden.

Bei dem hier vorgestellten Ansatz wird ein Gehäuse des Batteriemoduls so gestaltet, dass zumindest eine der parallel zu der Elektrodenfläche ausgerichteten Seitenflächen, Bodenfläche und/oder Deckenfläche des Gehäuses zumindest einen elastisch verformbaren Bereich aufweist, der durch eine aus einer Dickenvergrößerung der Zellen resultierenden Kraft wie eine Feder nach außen verdrängt werden kann und sich bei einer Dickenverringerung der Zellen durch eine Rückstellkraft wieder zurück verlagert. Die Fläche kann dabei eine Seitenfläche, Bodenfläche oder Deckenfläche des Batteriemoduls sein.

Der elastische Bereich ist in einem unbelasteten Zustand relativ zu einer Ebene der Fläche zumindest anteilig in Richtung einer Modulinnenseite versetzt angeordnet. Der elastische Bereich ist einstückig mit einem starren Bereich der Fläche verbunden. Der starre Bereich ist insbesondere in der Ebene angeordnet.

Es wird ein Batteriemodul für eine Traktionsbatterie eines Elektrofahrzeugs vorgeschlagen, wobei das Batteriemodul zwei auf entgegengesetzten Seiten des Batteriemoduls angeordnete, im Wesentlichen parallel zu einer Elektrodenfläche von Zellen des Batteriemoduls ausgerichtete Seitenteile aufweist, wobei zumindest eines der Seitenteile einen elastischen Bereich aufweist, der dazu ausgebildet ist, eine Presskraft senkrecht zu der Elektrodenfläche auf die Zellen auszuüben.

Unter einer Traktionsbatterie kann ein Energiespeicher für ein elektrisch angetriebenes Fahrzeug verstanden werden. Die Traktionsbatterie kann ein Gehäuse aufweisen, das Komponenten der Traktionsbatterie umschließt und vor mechanischen Einflüssen und Umwelteinflüssen schützt. Die Traktionsbatterie kann modular aufgebaut sein. Die Traktionsbatterie kann beispielsweise an einer Bodengruppe des Fahrzeugs befestigt sein. Das Gehäuse kann innenliegende Versteifungselemente aufweisen. Die Versteifungselemente können einen verfügbaren Bauraum für Batteriemodule der Traktionsbatterie vorgeben.

Die Traktionsbatterie kann mehrere Batteriemodule aufweisen. Die Batteriemodule können zwischen den Versteifungselementen der Traktionsbatterie angeordnet werden. Ein Batteriemodul kann mehrere Zellen beziehungsweise Batteriezellen zusammenfassen. Die Zellen können innerhalb des Batteriemoduls elektrisch verschaltet sein. Die Batteriemodule können innerhalb der Traktionsbatterie elektrisch verschaltet sein. Das Batteriemodul kann ein Gehäuse aufweisen, das die Zellen umschließt. Das Gehäuse kann eine im Wesentlichen quaderförmige Grundform aufweisen.

Die Zellen können insbesondere prismatische Zellen oder Pouchzellen sein. In den Zellen können verschiedene Materialien schichtweise angeordnet sein. Die Schichten können flächig sein und jeweils in parallelen Ebenen angeordnet sein. Elektroden der Zellen können an die Schichten angrenzen. Die Elektroden können beispielsweise Bleche sein. Die Elektroden können ebenso parallel zu den Ebenen angeordnet sein. Eine Elektrodenfläche kann einer Flachseite der Elektrode entsprechen. Die Elektrodenfläche kann im Wesentlichen parallel zu einer Fläche der quaderförmigen Grundform sein.

Ein Seitenteil kann ein Bestandteil des Gehäuses des Batteriemoduls sein. Das Seitenteil kann eine Fläche der quaderförmigen Grundform ausbilden. Das Seitenteil kann im Wesentlichen parallel zu der Elektrodenfläche ausgerichtet sein. Die Fläche der quaderförmigen Grundform kann in der Haupterstreckungsebene des Seitenteils liegen.

Ein elastischer Bereich kann ein federnder Bereich sein. Der elastische Bereich kann eine durch eine Geometrie des elastischen Bereich definierte Federkennlinie aufweisen. Die Federkennlinie kann linear oder nichtlinear verlaufen. Beispielsweise kann die Federkennlinie progressiv sein. Der elastische Bereich kann eine höhere Elastizität aufweisen und daher mit geringeren Kräften in einer Richtung orthogonal zu der Haupterstreckungsebene des Seitenteils verlagerbar sein, als dies für das Seitenteil in seiner Gesamtheit zutrifft. Anders ausgedrückt kann das Seitenteil neben dem elastischen Bereich auch zumindest einen versteifenden Stützbereich mit einer geringeren Elastizität aufweisen.

Der elastische Bereich kann versetzt zu einer Haupterstreckungsebene des Seitenteils angeordnet sein. Der elastische Bereich kann insbesondere in Richtung eines Modulinneren versetzt zu der Haupterstreckungsebene angeordnet sein.

In zusammengebautem Zustand kann der elastische Bereich vorgespannt sein, um eine Mindestpresskraft auf die Zellen auszuüben. Die Presskraft kann abhängig von der Federkennlinie und einer Auslenkung des elastischen Bereichs ansteigen.

Das Seitenteil kann geprägt oder tiefgezogen sein. Ebenso kann anderweitig eine dreidimensionale Struktur geformt sein. Der elastische Bereich kann durch einen Prägevorgang oder einen Tiefziehvorgang aus der Haupterstreckungsebene ausgestellt worden sein. Ebenso können starre Stützbereiche des Seitenteils durch den Prägevorgang oder den Tiefziehvorgang hergestellt werden. Versteifungen der Stützbereiche können ebenfalls in Richtung des Modulinneren gebogen sein.

Das Seitenteil kann aus einen Metallmaterial hergestellt sein. Ein Metallmaterial kann gute elastische Eigenschaften und eine hohe Wärmeleitfähigkeit aufweisen. Das Metallmaterial kann gut geprägt oder tiefgezogen werden. Das Seitenteil kann aus einem Eisen- und/oder Aluminium- haltigen Werkstoff bestehen. Die steifen und elastischen Bereiche können durch unterschiedliche Werkstoffe oder Werkstoffkombinationen oder Werkstoffverteilungen ausgebildet sein. Alternativ kann das Seitenteil aus einem Kunststoffmaterial bestehen. Das Kunststoffmaterial kann ebenso tiefgezogen werden. Alternativ kann das Kunststoffmaterial spritzgegossen werden.

Die Presskraft kann einer Flächenpressung zwischen 1 kPa und 10 kPa, d.h. zwischen 0,01 bar und 0,1 bar, entsprechen. Die resultierende Presskraft ist abhängig von einer Fläche der Zellen. Je größer die Zellen, umso höher ist die Presskraft, die zum Erreichen der gewünschten Flächenpressung erforderlich ist.

Das Seitenteil kann zumindest eine Ausnehmung zwischen dem elastischen Bereich und einem in der Haupterstreckungsebene angeordneten Stützbereich aufweisen. Eine Ausnehmung kann als Schnitt oder Durchbruch bezeichnet werden. Eine Ausnehmung kann eine Steifigkeit des elastischen Bereichs reduzieren. Die Ausnehmung kann sich entlang einer gesamten Seitenlänge des elastischen Bereichs erstrecken. Beispielsweise kann der elastische Bereich als zungenförmiges Federelement ausgeführt sein. Das Federelement kann an einer, zwei oder drei Seiten durch Ausnehmungen von dem Stützbereich getrennt sein.

Zwischen dem elastischen Bereich und einer äußersten der in dem Batteriemodul aufgenommenen Zellen kann zumindest eine Verteilerplatte angeordnet sein. Die Verteilerplatte kann die Presskraft gleichmäßig verteilen. Die Verteilerplatte kann auch isolieren und/oder schützen. Eine Verteilerplatte kann eine Angriffsfläche der Presskraft vergrößern. Die Verteilerplatte kann im Wesentlichen so groß wie die Zellen sein, d.h. eine Fläche aufweisen, die ebenso groß wie diejenige Flachseite der äußersten Zelle ist, an der die Verteilerplatte anliegt. Die Verteilerplatte kann die Presskraft auf die ganze Flachseite der Zelle verteilen. Hierzu kann die Verteilerplatte bzw. eine tragende Struktur der Verteilerplatte eine höhere Steifigkeit bzw. geringere Elastizität aufweisen als der elastische Bereich des Seitenteils. Die Verteilerplatte kann relativ zu dem Seitenteil beweglich angeordnet sein.

Die Verteilerplatte kann ein Metallblech aufweisen. Metallblech kann eine hohe Wärmeleitfähigkeit aufweisen. Die Verteilerplatte kann Wärme von der angrenzenden Zelle direkt auf das Seitenteil übertragen.

Die Verteilerplatte kann eine Schicht aus kompressiblem Material aufweisen. Das kompressible Material kann als compression pad bezeichnet werden. Durch das kompressible Material können kleinräumige Dickentoleranzen der äußersten Zelle ausgeglichen werden und eine gleichmäßige Flächenpressung erreicht werden. Das kompressible Material kann eine höhere Kompressibilität aufweisen als ein Material der tragenden Struktur der Verteilerplatte.

Der elastische Bereich kann in mehrere getrennte Teilbereiche unterteilt sein. Mit anderen Worten kann das Seitenteil mehrere voneinander getrennte elastische Bereiche aufweisen. Jeder Teilbereich kann als eigenständige Feder wirken. Durch mehrere Teilbereiche können ungleichmäßige Dickenveränderungen einfach ausgeglichen werden. Mehrere Teilbereiche ermöglichen eine gleichmäßige Verteilung der Presskraft.

Die Teilbereiche können gleichartig sein. Die Teilbereiche können alle die gleiche Federkennlinie aufweisen. Dadurch kann eine besonders gleichmäßige Verteilung der Presskraft erreicht werden.

Das Seitenteil kann entlang von zumindest zwei gegenüberliegenden Kanten biegesteife Stützbereiche aufweisen. Insbesondere kann das Seitenteil entlang einer Oberkante und einer Unterkante Stützbereiche aufweisen. Die Stützbereiche können eine Durchbiegung des Seitenteils aufgrund der Presskraft reduzieren. Die Stützbereiche können im Wesentlichen senkrecht zu der Haupterstreckungsebene gebogene Rippen aufweisen, um einen hohen Biegewiderstand zu erreichen.

Das Seitenteil kann zwischen den Teilbereichen des elastischen Bereichs je einen biegesteifen Stützbereich aufweisen. Die Stützbereiche zwischen den elastischen Bereichen können quer zu den Stützbereichen an den Kanten angeordnet sein. Die Stützbereiche können leiterförmig angeordnet sein.

Die Seitenteile können durch zumindest einen Steg miteinander verbunden sein. Ein Steg kann ein Streifen aus einem Metallmaterial sein, der an beiden Seitenteilen mechanisch verbunden ist. Beispielsweise kann der Steg in entsprechende Aussparungen der Seitenteile eingerastet werden. Der Steg verhindert ein Ausbeulen der Seitenteile durch die aufgebrachte Presskraft, indem er die Gegenkraft zu der Presskraft an dem jeweils gegenüberliegenden Seitenteil abstützt.

### Kurze Figurenbeschreibung

Nachfolgend wird ein vorteilhaftes Ausführungsbeispiel der Erfindung unter Bezugnahme auf die begleitenden Figuren erläutert. Es zeigt:
Fig. 1 eine Darstellung eines Batteriemoduls gemäß einem Ausführungsbeispiel;
Fig. 2 eine Schnittdarstellung eines Batteriemoduls gemäß einem Ausführungsbeispiel; und
Fig. 3 zeigt eine Darstellung eines Batteriemoduls gemäß einem Ausführungsbeispiel.

Die Figuren sind lediglich schematische Darstellungen und dienen nur der Erläuterung der Erfindung. Gleiche oder gleichwirkende Elemente sind durchgängig mit den gleichen Bezugszeichen versehen.

### Detaillierte Beschreibung

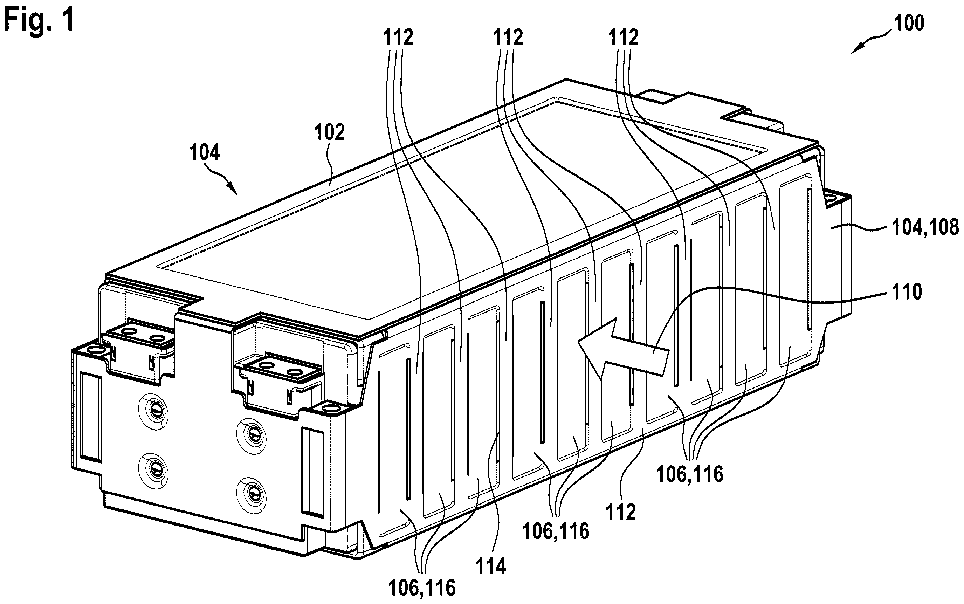

Fig. 1 zeigt eine Darstellung eines Batteriemoduls 100 gemäß einem Ausführungsbeispiel. Das Batteriemodul 100 kann mit mehreren weiteren Batteriemodulen 100 zu einer Traktionsbatterie eines Elektrofahrzeugs zusammengeschaltet werden. Das Batteriemodul 100 weist ein Gehäuse 102 auf, das mehrere Flachseite an Flachseite angeordnete Batteriezellen oder kurz Zellen des Batteriemoduls 100 umschließt. Die Zellen können dabei Pouchzellen oder prismatische Zellen sein. Elektroden der Zellen sind parallel zu den Flachseiten angeordnet. Die Zellen sind innerhalb des Gehäuses zwischen zwei Terminals des Batteriemoduls 100 elektrisch verschaltet. Die Zellen sind hier nebeneinander im Gehäuse 102 angeordnet.

Das Gehäuse 102 ist näherungsweise quaderförmig. Zwei gegenüberliegende Seitenteile 104 des Gehäuses 102 sind im Wesentlichen parallel zu den Flachseiten der Zellen beziehungsweise Elektrodenflächen der Elektroden ausgerichtet.

Wenn die Zellen geladen oder entladen werden, kann sich ihr Volumen verändern. Insbesondere wirkt sich die Volumenveränderung auf eine Dicke der einzelnen Zelle aus. Die Änderungen der Dicke aller Zellen des Batteriemoduls 100 summieren sich.

Zum Kompensieren dieser Dickenänderung weist zumindest eines der Seitenteile 104 einen elastischen Bereich 106 auf. Der elastische Bereich 106 wirkt als mechanische Feder und gleicht die Dickenänderung der Zellen aus. Der elastische Bereich 106 ist nach innen versetzt zu einer Haupterstreckungsebene 108 des Seitenteils 104 angeordnet, um einen definierten Federweg bereitzustellen. Der elastische Bereich 106 kann maximal bis zur Haupterstreckungsebene 108 verformt werden. Das heißt, ein Versatz zwischen dem elastischen Bereich 106 und der beispielsweise durch Stützbereiche 112 definierten Haupterstreckungsebene 108 ist vorzugsweise größer oder gleich dem Federweg, um den sich der elastische Bereich 106 unter normalen Betriebsbedingungen elastisch verlagert. Beispielsweise kann der Versatz in einer Richtung senkrecht zu der Haupterstreckungsebene 108 mehr als 1 mm, beispielsweise mehrere Millimeter, betragen.

Der elastische Bereich 106 weist eine Federkennlinie auf. Eine Presskraft 110 des elastischen Bereichs 106 ist abhängig von der Federkennlinie und einer Verformung des elastischen Bereichs 106. Die Federkennlinie ist abhängig von Materialeigenschaften des Seitenteils 104 und einer geometrischen Gestaltung des elastischen Bereichs 106. Für eine vorteilhafte Federkennlinie besteht das Seitenteil 104 insbesondere aus einem Metallmaterial beziehungsweise Metallblech. Die Presskraft 110 wirkt senkrecht auf die Flachseite der äußersten Zelle. Durch die Presskraft 110 werden alle Zellen des Batteriemoduls 100 zusammengepresst. Die Presskraft 110 ist variabel und wird bei einer Dickenzunahme der Zellen größer, da die Verformung des elastischen Bereichs 106 zunimmt. Bei einer Dickenabnahme der Zellen wird die Presskraft 110 kleiner, da die Verformung abnimmt.

In einem Ausführungsbeispiel ist der elastische Bereich 106 in das Seitenteil 104 geprägt beziehungsweise tiefgezogen. Während des Prägevorgangs oder Tiefziehvorgangs wird das Seitenteil dauerhaft plastisch verformt und der elastische Bereich 106 als Vertiefung beziehungsweise Tasche im Seitenteil 104 ausgebildet.

In einem Ausführungsbeispiel weist das Seitenteil 104 zwischen Stützbereichen 112 des Seitenteils 104 und dem elastischen Bereich 106 zumindest eine Ausnehmung 114 auf. Die Ausnehmung 114 ist ein Schlitz oder Durchbruch im Seitenteil 104. Durch die Ausnehmung 114 kann die Federkennlinie des elastischen Bereichs 106 anforderungsgemäß eingestellt werden. Insbesondere macht die Ausnehmung 114 den elastischen Bereich 106 weniger steif. Mit anderen Worten kann der elastische Bereich 106 durch die Ausnehmung 114 gezielt geschwächt werden, um die Presskraft 110 zu verringern. Beispielsweise kann die Presskraft 110 derart limitiert werden, dass sich eine Flächenpressung der Zellen zwischen 0,01 bar und 0,1 bar ergibt.

In einem Ausführungsbeispiel ist der elastisch Bereich 106 in mehrere Teilbereiche 116 unterteilt. Zwischen zwei Teilbereichen 116 ist jeweils ein Stützbereich 112 angeordnet. Die Stützbereiche 112 sind im Wesentlichen in der Haupterstreckungsebene 108 angeordnet. Die Stützbereiche 112 sind hier leiterartig gestaltet, wobei zwei entlang von gegenüberliegenden Längskanten des Seitenteils 104 verlaufende äußere Stützbereiche 112 Holme einer Leiter repräsentieren und quer zwischen den äußeren Stützbereichen 112 verlaufende Stützbereiche 112 Sprossen der Leiter repräsentieren. Die Teilbereiche 116 des elastischen Bereichs 106 sind damit von den Sprossen und Holmen umschlossen. Die Teilbereiche 116 können im Wesentlichen gleichartig sein.

In einem Ausführungsbeispiel sind die an den Kanten verlaufenden Stützbereiche 112 durch dreidimensionale Verformungen des Seitenteils 104 versteift. Die Verformungen sind dabei im Wesentlichen senkrecht zur Haupterstreckungsebene 108 abgekantete Bereiche des Seitenteils 104. Die abgekanteten Bereiche verlaufen damit im Wesentlichen parallel zu einem Deckel des Batteriemoduls 100.

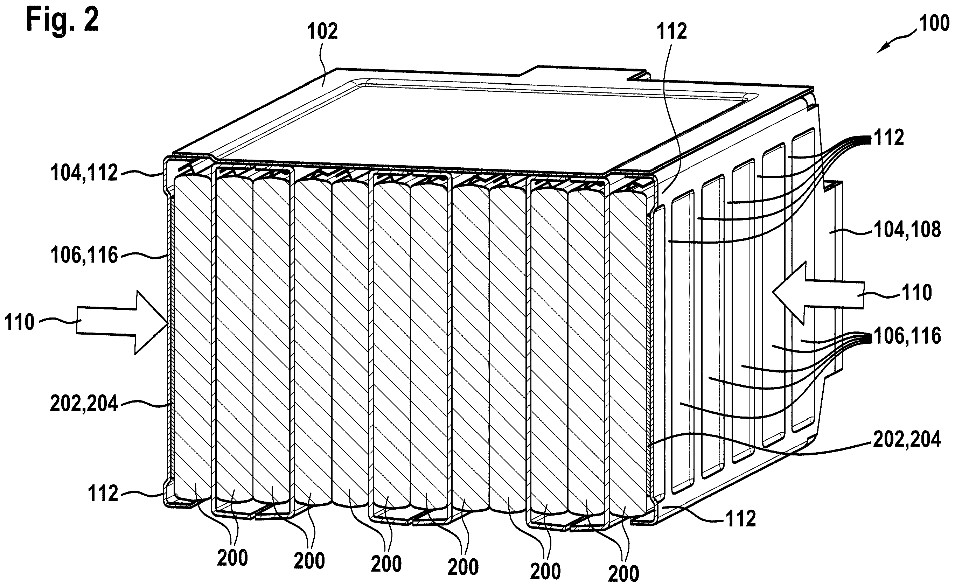

Fig. 2 zeigt eine Schnittdarstellung eines Batteriemoduls 100 gemäß einem Ausführungsbeispiel. Das Batteriemodul 100 entspricht dabei im Wesentlichen dem Batteriemodul in Fig. 1 ist senkrecht zur Haupterstreckungsebene 108 geschnitten dargestellt. Das Batteriemodul 100 weist 12 Zellen 200 auf. Die Zellen 200 sind hier Pouchzellen. In diesem Ausführungsbeispiel weisen beide Seitenteile 104 elastische Bereiche 106 auf.

In einem Ausführungsbeispiel sind zwischen den äußersten Zellen 200 und den elastischen Bereichen 106 Verteilerplatten 202 zum gleichmäßigen Verteilen der Presskraft 110 angeordnet. Die Verteilerplatten 202 können beispielsweise ebene Metallbleche sein, die durch ihre hohe Wärmeleitfähigkeit eine gute Wärmeabfuhr ermöglichen. Die Verteilerplatten 202 können auch ein kompressibles Material 204 aufweisen. Das kompressible Material 204 kann insbesondere direkt an den äußeren Zellen 200 anliegen und Ebenheitstoleranzen der Zellen 200 und der Verteilerplatten 202 ausgleichen. Das kompressible Material 204 kann auch durch die Dickenänderung der Zellen 200 zusammengepresst oder entlastet werden.

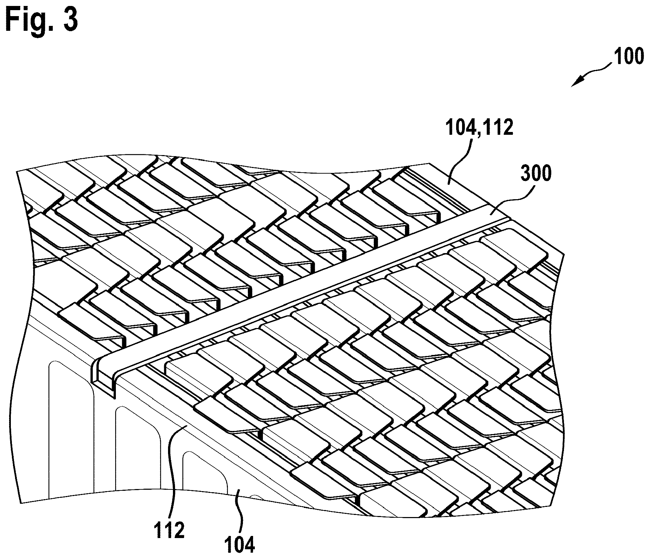

Fig. 3 zeigt eine Darstellung eines Batteriemoduls 100 gemäß einem Ausführungsbeispiel. Das Batteriemodul 100 entspricht im Wesentlichen den vorhergehend dargestellten Batteriemodulen. Zusätzlich sind hier die an den entgegengesetzten Seiten des Batteriemoduls 100 angeordneten Seitenteile 104 durch einen auf Zug belasteten Steg 300 miteinander verbunden. Der Steg 300 überträgt zumindest einen Anteil der Gegenkraft zu der Presskraft 110 des einen Seitenteils 104 auf das jeweils andere Seitenteil 104. Der Steg 300 ist im Bereich des längs des jeweiligen Seitenteils 104 verlaufenden Stützbereichs 112 mit dem jeweiligen Seitenteil 104 verbunden. Durch den Steg 300 wird eine Deformation der Stützbereiche 112 nach außen näherungsweise verhindert.

Der Steg 300 ist hier an einer Unterseite des Batteriemoduls 100 angeordnet. Ebenso kann zumindest ein weiterer Steg an einer Oberseite des Batteriemoduls 100 angeordnet sein. Die Stege können beispielsweise jeweils mittig an den Seitenteilen 104 angeordnet sein.

In einem alternativen Ausführungsbeispiel sind die Seitenteile 104 durch zumindest ein um das gesamte Batteriemodul 100 umlaufendes Band abgestützt. Das Band verläuft dabei ringförmig geschlossen über die Oberseite, die Unterseite und die Seitenteile 104. In den Seitenteilen kann beispielsweise eine Sicke für das Band vorgesehen sein.

Mit anderen Worten wird ein Modulgehäuse mit Swelling-Kompensation vorgestellt.

Lithium-Pouchzellen weisen beim Laden und Entladen (Zyklisierung) eine reversible Dickenänderung senkrecht zur Elektrodenfläche auf. Weiterhin benötigen Pouchzellen eine Mindestpressung der Elektroden, damit bei wiederkehrender Zyklisierung die Rückstellung des Elektrodenstapels erfolgen kann und keine Delaminierung der Elektroden zueinander stattfindet. Werden Pouchzellen zu einem Zellmodul verbaut, so können Ausgleichselemente vorgesehen werden, die eine Mindestpresskraft über die Elektrodenfläche sicherstellen. Beispielsweise kann herkömmlicher Weise der Modulrahmen möglichst steif ausgebildet werden und der Dickenausgleich über elastische Einlegematten geschaffen werden. Dabei sind jedoch hohe Vorspannkräfte erforderlich und eine gleichmäßige Flächenpressung ist nur schwer zu realisieren.

Bei dem hier vorgestellten Ansatz sind die Pressseiten des Modulrahmens derart gestaltet, dass diese elastisch vorgespannt sind, um eine gleichmäßige Flächenpressung über die Betriebszeit des Moduls sicherzustellen.

Durch den hier vorgestellten Ansatz können eine Gewichtseinsparung beim Modulrahmen, eine geringere Komplexität durch Entfall zusätzlicher Ausgleichselemente und eine Vereinfachung der Modulkonstruktion erreicht werden.

Das hier vorgestellte Zellmodul mit Lithium-Pouchzellen für einen Fahrzeugbatterie weist vorgeformte Seitenteile auf, die eine homogene Presskraft senkrecht zu den Elektrodenflächen ausüben. Die die Seitenteile weisen elastische Bereiche auf, die Dickenänderungen der Zellen zulassen und dauerhaft eine homogene Flächenpressung gewährleisten. Die die Seitenteile bestehen aus geprägten oder tiefgezogenen Metallblechen. Die Prägung weist in Zusammenwirken mit einer Mindestpresskraft einen gleichmäßigen Biegeverlauf auf, der eine gleichmäßige Flächenpressung ausübt. Die Biegesteifigkeit der Seitenteile kann durch Ausnehmungen eingestellt werden. Beispielsweise kann die anfängliche Presskraft auf jedem Zellbereich zwischen 0,01 bar und 0,1 bar eingestellt werden.

Die Seitenteile können zusätzlich zumindest einmal über die Länge hinweg durch einen elastischen Steg oder sonstige mechanische Verbindung verbunden sein, um eine Auslenkung der Stützbereiche nach außen zu reduzieren. Der Steg beziehungsweise die Verbindung kann beispielsweise als Metallklammer oder umgreifendes Band ausgeführt sein. Die Verbindung kann an einer Oberseite und/oder Unterseite des Batteriemoduls angeordnet sein.

Da es sich bei der vorhergehend detailliert beschriebenen Vorrichtungen und Verfahren um Ausführungsbeispiele handelt, können sie in üblicher Weise vom Fachmann in einem weiten Umfang modifiziert werden, ohne den Bereich der Erfindung zu verlassen. Insbesondere sind die mechanischen Anordnungen und die Größenverhältnisse der einzelnen Elemente zueinander lediglich beispielhaft.

### BEZUGSZEICH EN LISTE

- 100: Batteriemodul
- 102: Gehäuse
- 104: Seitenteil
- 106: elastischer Bereich
- 108: Haupterstreckungsebene
- 110: Presskraft
- 112: Stützbereich
- 114: Ausnehmung
- 116: Teilbereich

- 200: Zelle
- 202: Verteilerplatte
- 204: kompressibles Material

- 300: Steg

## Patentansprüche

1. Batteriemodul (100) für eine Traktionsbatterie eines Elektrofahrzeugs, wobei das Batteriemodul (100) zwei auf entgegengesetzten Seiten des Batteriemoduls (100) angeordnete, im Wesentlichen parallel zu einer Elektrodenfläche von Zellen (200) des Batteriemoduls (100) ausgerichtete Seitenteile (104) aufweist, wobei zumindest eines der Seitenteile (104) einen elastischen Bereich (106) aufweist, der dazu ausgebildet ist, eine Presskraft (110) senkrecht zu der Elektrodenfläche auf die Zellen (200) auszuüben.

2. Batteriemodul (100) gemäß Anspruch 1, bei dem der elastische Bereich versetzt zu einer Haupterstreckungsebene (108) des Seitenteils (104) angeordnet ist.

3. Batteriemodul (100) gemäß einem der vorhergehenden Ansprüche, bei dem das Seitenteil (104) aus einem Metallwerkstoff hergestellt ist.

4. Batteriemodul (100) gemäß einem der vorhergehenden Ansprüche, bei dem die Presskraft (110) einer Flächenpressung zwischen 1 kPa und 10 kPa entspricht.

5. Batteriemodul (100) gemäß einem der vorhergehenden Ansprüche, bei dem das Seitenteil (104) zumindest eine Ausnehmung (114) zwischen dem elastischen Bereich (106) und einem in der Haupterstreckungsebene (108) angeordneten Stützbereich (112) aufweist.

6. Batteriemodul (100) gemäß einem der vorhergehenden Ansprüche, bei dem zwischen dem elastischen Bereich (106) und einer äußersten Zelle (200) zumindest eine Verteilerplatte (202) angeordnet ist.

7. Batteriemodul (100) gemäß Anspruch 6, bei dem die Verteilerplatte (202) ein Metallblech aufweist.

8. Batteriemodul (100) gemäß einem der Ansprüche 6 bis 7, bei dem die Verteilerplatte (202) eine Schicht aus einem kompressiblen Material (204) aufweist, welches eine höhere Kompressibilität aufweist als ein Material einer tragenden Struktur der Verteilerplatte (202).

9. Batteriemodul (100) gemäß einem der vorhergehenden Ansprüche, bei dem der elastische Bereich (106) in mehrere getrennte Teilbereiche (116) unterteilt ist.

10. Batteriemodul (100) gemäß Anspruch 9, bei dem die Teilbereiche (116) gleichartig sind.

11. Batteriemodul (100) gemäß einem der vorhergehenden Ansprüche, bei dem das Seitenteil (104) entlang von zumindest zwei gegenüberliegenden Kanten biegesteife Stützbereiche (112) aufweist.

12. Batteriemodul (100) gemäß einem der Ansprüche 9 bis 11, bei dem das Seitenteil (104) zwischen den Teilbereichen (116) je einen biegesteifen Stützbereich (112) aufweist.

13. Batteriemodul (100) gemäß einem der vorhergehenden Ansprüche, bei dem die Seitenteile (104) durch zumindest einen Steg (300) miteinander verbunden sind.
